(19)

Europäisches
Patentamt
European
Patent Office
Office européen
des brevets

(11) **EP 4 310 408 A1**

(12) **EUROPEAN PATENT APPLICATION**
published in accordance with Art. 153(4) EPC

(43) Date of publication:
**24.01.2024 Bulletin 2024/04**

(21) Application number: **22794172.1**

(22) Date of filing: **04.01.2022**

(51) International Patent Classification (IPC):
**F24F 11/64** (2018.01)     **F24F 11/56** (2018.01)
**H04W 4/029** (2018.01)

(86) International application number:
**PCT/CN2022/070148**

(87) International publication number:
**WO 2022/227688** (03.11.2022 Gazette 2022/44)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.04.2021 CN 202110480015**

(71) Applicants:
• **Shanghai Kong Intelligent Building Co., Ltd**
**Shanghai 200080 (CN)**

• **GD Midea Heating & Ventilating Equipment Co.,
Ltd.**
**Foshan Guangdong 528311 (CN)**

(72) Inventor: **MAO, Zhili**
**Shanghai 200080 (CN)**

(74) Representative: **Whitlock, Holly Elizabeth Ann et al**
**Maucher Jenkins**
**Seventh Floor Offices**
**Artillery House**
**11-19 Artillery Row**
**London SW1P 1RT (GB)**

(54) **METHOD AND APPARATUS FOR GROUPING AIR CONDITIONING DEVICES, AND DEVICE AND STORAGE MEDIUM**

(57)     The present application is applicable to the technical field of air conditioners. Provided are a method and apparatus for grouping air conditioning devices, and a device and a storage medium. The method comprises: marking a measurement point in an electronic map of a target region, and acquiring the coordinates of the measurement point in the electronic map; according to a Bluetooth signal that is received at the measurement point, acquiring an identification code of an air conditioning device that is located in the vicinity of the measurement point, and relative position information between the measurement point and the air conditioning device in the vicinity thereof; according to the relative position information between the measurement point and the air conditioning device in the vicinity thereof, determining target air conditioning devices that are located in the target region; and generating grouping information corresponding to the target region, wherein the grouping information comprises the coordinates of the measurement point in the electronic map and identification codes of all the target air conditioning devices. By means of a positioning method based on a Bluetooth signal, the position, in an electronic map, of an air conditioning device in a target region can be easily and quickly determined, and corresponding grouping information can be generated, thereby increasing the error-tolerance rate and reducing the labor costs.

FIG. 1

## Description

The present application claims a priority to Chinese Patent Application No. 202110480015.2, titled "METHOD AND APPARATUS FOR GROUPING AIR CONDITIONING DEVICES, AND DEVICE AND STORAGE MEDIUM", and filed with China National Intellectual Property Administration on April 30, 2021, the entire contents of which are incorporated herein by reference.

## FIELD

The present disclosure belongs to the field of air conditioning technologies, and more particularly, to a method and apparatus for grouping air conditioning devices, a device, and a storage medium.

## BACKGROUND

In an air-conditioning centralized control system, a user needs to group air conditioning devices in the system to facilitate management and control of the air conditioning devices. Most of the grouping operations are divided based on geographic positions of the air conditioning devices, enabling administrators to quickly locate the air conditioning device that needs to be managed and controlled.

Conventional methods for positioning the air conditioning devices mainly depend on retaining mounting data by installers and associating, based on the mounting data, serial numbers of the air conditioning devices with geographic positions of the air conditioning devices. On the one hand, grouping and positioning the air conditioning devices based on the mounting data has a low fault-tolerance rate. If the format of the mounting data is incorrect, the results of subsequent operations will be directly affected. On the other hand, the format of the mounting data usually cannot be directly applied to the air-conditioning centralized control system, which requires manual compilation and operations, increasing labor costs.

## SUMMARY

## TECHNICAL PROBLEM

One of the objects of embodiments of the present disclosure is to provide a method and apparatus for grouping air conditioning devices, a device, and a storage medium. Conventional methods for positioning air conditioning devices mainly depend on retaining mounting data by installers and associating, based on the mounting data, serial numbers of the air conditioning devices with geographic positions of the air conditioning devices, which results in problems of a low fault-tolerance rate and a need for manual compilation and operations that increase labor costs. The embodiments of the present disclosure aim to solve the above problems.

## TECHNICAL SOLUTION

To solve the above technical problems, embodiments of the present disclosure provide the following technical solutions.

According to an embodiment in a first aspect of the present disclosure, a method for grouping air conditioning devices is provided. The method includes: marking a measurement point in an electronic map of a target region, and obtaining coordinates of the measurement point in the electronic map; obtaining, based on a Bluetooth signal received at the measurement point, an identification code of each of air conditioning devices located around the measurement point and relative position information between the measurement point and the air conditioning devices located around the measurement point; determining at least one target air conditioning device in the target region based on the relative position information between the measurement point and the air conditioning devices located around the measurement point; and generating grouping information corresponding to the target region. The grouping information includes the coordinates of the measurement point in the electronic map and an identification code of each of the at least one target air conditioning device.

According to an embodiment in a second aspect of the present disclosure, an apparatus for grouping air conditioning devices is provided. The apparatus includes: a first obtaining unit configured to mark a measurement point in an electronic map of a target region, and obtain coordinates of the measurement point in the electronic map; a second obtaining unit configured to obtain, based on a Bluetooth signal received at the measurement point, an identification code of each of air conditioning devices located around the measurement point and relative position information between the measurement point and the air conditioning devices located around the measurement point, the relative position information including a relative distance and relative coordinates; a determination unit configured to determine at least one target air conditioning device in the target region based on the relative position information between the measurement point and the air conditioning devices located around the measurement point; and a generation unit configured to generate grouping information corresponding to the target region. The grouping information includes the coordinates of the measurement point in the electronic map and an identification code of each of the at least one target air conditioning device.

According to an embodiment in a third aspect of the present disclosure, a mobile device is provided. The mobile device includes a communication unit, a memory, a processor, and a computer program stored in the memory and executable on the processor. The processor, when executing the computer program, implements the steps of the method for grouping the air conditioning devices according to the embodiment in the first aspect of the present disclosure.

According to an embodiment in a fourth aspect of the present disclosure, a computer-readable storage medium is provided. The computer-readable storage medium stores a computer program. The computer program, when executed by a processor, implements the steps of the method for grouping the air conditioning devices according to the embodiment in the first aspect of the present disclosure.

## ADVANTAGEOUS EFFECT

With the method for grouping the air conditioning devices according to the embodiment in the first aspect of the present disclosure, the measurement point in the electronic map of the target region is marked and the coordinates of the measurement point are obtained in the electronic map. The identification code of each of the air conditioning devices located around the measurement point and the relative position information between the measurement point and the air conditioning devices located around the measurement point are obtained based on the Bluetooth signal received at the measurement point. The at least one target air conditioning device in the target region is determined based on the relative position information between the measurement point and the air conditioning devices located around the measurement point. The grouping information corresponding to the target region is generated. The grouping information includes the coordinates of the measurement point in the electronic map and the identification code of each of the at least one target air conditioning device. With a positioning method based on the Bluetooth signal, a position, in the electronic map, of at least one air conditioning device in the target region can be easily and quickly located, and corresponding grouping information can be generated, which improves a fault-tolerance rate and reduces labor costs.

It should be understood that reference to advantageous effects of the above-mentioned second aspect to the above-mentioned fourth aspect can be made to relevant description in the above-mentioned first aspect, and thus details thereof will be omitted here.

## BRIEF DESCRIPTION OF THE DRAWINGS

In order to clearly explain technical solutions in embodiments of the present disclosure, drawings used in the description of the embodiments or the related art are briefly described below. Obviously, the drawings as described below are merely some embodiments of the present disclosure. Based on these drawings, other drawings can be obtained by those skilled in the art without creative effort.

FIG. 1 is a first schematic flowchart illustrating a method for grouping air conditioning devices according to embodiments of the present disclosure.
FIG. 2 is a second schematic flowchart illustrating a method for grouping air conditioning devices according to embodiments of the present disclosure.
FIG. 3 is a third schematic flowchart illustrating a method for grouping air conditioning devices according to embodiments of the present disclosure.
FIG. 4 is a schematic diagram showing a structure of an apparatus for grouping air conditioning devices according to embodiments of the present disclosure.
FIG. 5 is a schematic diagram showing a structure of a mobile device according to embodiments of the present disclosure.

## DETAILED DESCRIPTION OF THE EMBODIMENTS

In the following description, for illustration rather than limitation, specific details such as particular apparatus structures and techniques are provided to facilitate a thorough understanding of embodiments of the present disclosure. However, it should be clear to those skilled in the art that the present disclosure can be realized in other embodiments without these specific details. In other cases, detailed description of well-known devices, apparatuses, circuits, and methods are omitted to prevent unnecessary details from impeding the description of the present disclosure.

It should be understood that, when used in the specification of the present disclosure and the appended claims, the term "include" indicates the presence of the described features, integrals, steps, operations, elements, and/or components, but does not preclude the presence or an addition of one or more other features, integrals, steps, operations, elements, components, and/or a collection thereof.

It should further be understood that, the term "and/or" used in the specification of the present disclosure and the appended claims refers to and includes any and all possible combinations of one or more of the listed items associated with the term "and/or".

As used in the specification of the present disclosure and the appended claims, the term "if' can be interpreted contextually as "when" or "once" or "in response to determining" or "in response to detecting". Similarly, the phrases "if determined" or "if [the described condition or event] is detected" can be interpreted contextually to mean "once determined" or "in response to determining" or "once [the described condition or event] is detected" or "in response to detecting [the described condition or event]".

In addition, in the description of the specification of the present disclosure and the appended claims, terms "first", "second", "third" etc. are used only to distinguish the description and cannot be understood as indicating or implying relative importance.

References throughout the specification of the present disclosure to "an embodiment" or "some embodiments" mean that a particular feature, structure, or characteristic described in conjunction with the embodiment is included in one or more embodiments of the present disclosure. As a result, the phrases such as "in one embodiment", "in some embodiments", "in some other embodiments", or "in some else embodiments" appearing in various places in this specification do not necessarily all refer to the same embodiment, but rather mean "one or more but not all embodiments", unless otherwise specifically emphasized. The terms "including", "containing", "having", and variations thereof mean "including but not limited to," unless otherwise specifically emphasized. The term "plurality" means two or more.

Embodiments of the present disclosure provide a method for grouping air conditioning devices, which may be implemented by a processor of a mobile device while executing a corresponding computer program. Whether each air conditioning device is located in a target region may be determined by receiving a Bluetooth signal broadcast by each air conditioning device at at least one measurement point in a target region, and obtaining an identification code of the air conditioning device and relative position information between the air conditioning device and each of the at least one measurement point based on the Bluetooth signal broadcast by the air conditioning device. Thus, grouping information can be generated based on coordinates of the at least one measurement point in an electronic map executed by the mobile device and an identification code of at least one air conditioning device located in the target region, to realize positioning of all the air conditioning devices in the target region. The grouping information is then imported into a management device to enable the management device to centrally manage and control all the air conditioning devices in the target region.

In applications, the mobile device may be any mobile device that can be in Bluetooth communication with the air conditioning device, can be in wired or wireless communication with the management device, has a function of running an electronic map APP and computation, and can be held by a user, e.g., a mobile phone, a tablet computer, a laptop computer, a netbook, a personal digital assistant, and the like. The management device may be a server, a computer, or the like for managing and controlling a plurality of air conditioning devices. The air conditioning devices may form an air-conditioning centralized control system with the management device. The mobile device and the management device both may support a variety of wired or wireless communication methods such as WiFi, Bluetooth, ZigBee, Ethernet, and USB interface communication.

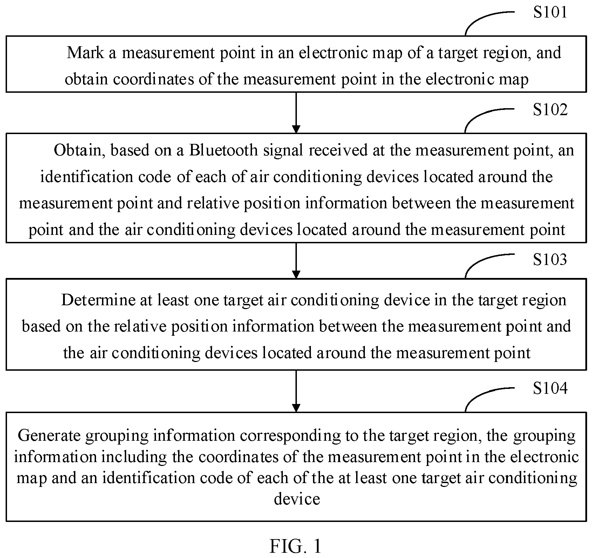

As illustrated in FIG. 1, the method for grouping the air conditioning devices according to the embodiments of the present disclosure includes the following operations at blocks.

At block S101, a measurement point is marked in an electronic map of a target region and coordinates of the measurement point are obtained in the electronic map.

In applications, the target region may be any free space in which the user needs to locate air conditioning devices for management and control by the management device, e.g., a floor of a building, a room on a floor of a building, a semi-open place such as a stadium, or the like. The electronic map may be an online map or an offline map displayed by the mobile device while running an electronic map APP.

In applications, the user holding the mobile device enters the target region that needs to be measured and is at one measurement point. In this case, the user may manually mark a position of the measurement point in the electronic map of the target region based on an actual position of the measurement point in the target region. If the mobile device and the electronic map APP support an indoor positioning function, the mobile device may be automatically controlled by the electronic map APP to locate and mark the position of the measurement point in the electronic map. After the marking is completed, coordinates of the measurement point in the electronic map may be automatically obtained by the mobile device based on a position of the measurement point in the electronic map APP.

In applications, the electronic map APP may include electronic maps of all regions that the user needs to measure. The target region is one of all the regions. When the user enters the target region, the mobile device may be manually operated by the user to display the electronic map of the target region. If the mobile device and the electronic map APP support the indoor positioning function, the mobile device may also be automatically controlled by the electronic map APP to locate to the target region in which the user is located and display the electronic map of the target region. The electronic map APP may also include only the electronic map of the target region that the user currently needs to measure. When the user needs to measure another target region, an electronic map of a next target region may be downloaded by the user through an online download method or an offline download method as desired. The online download method includes: 1) controlling, by the user, the electronic map APP to control the mobile device to establish a wireless communication connection with a server; and 2) automatically controlling, by the electronic map APP when the user holding the mobile device is in the next target region, the mobile device to locate to the next target region, and to establish the wireless communication connection with the server to download the electronic map of the next target region. With the offline download method, the user controls the electronic map APP to control the mobile device to establish a wired communication connection with a computer or an external storage device via a USB interface-based wired communication method, to download a desired electronic map of any other region.

In an embodiment, the method includes, prior to the operation at the block S101, receiving a marking instruction. The operation at block S101 includes marking the measurement point in the electronic map of the target region based on the marking instruction, and obtaining the coordinates of the measurement point in the electronic map.

In an embodiment, the method further includes, prior to the operation at block S101, receiving a map display instruction, and displaying the electronic map of the target region based on the map display instruction.

In applications, the marking instruction and the map display instruction may be input by the user as desired via a human-computer interaction component of the mobile device. The human-computer interaction component may include at least one of a physical button, a touch sensor, a gesture recognition sensor, or a speech recognition unit, enabling the user to input instruction through a corresponding one of a touch method, a gesture control method, or a speech control method. The physical button and the touch sensor may each be disposed at any position of the mobile device, such as a control panel. A touch method for the physical button may specifically be pressing or toggling. A touch method for the touch sensor may specifically be pressing, touching, or the like. The gesture recognition sensor may be disposed at any position outside a housing of the mobile device. A gesture for controlling the mobile device may be customized by the user as desired or may be a factory default gesture. The speech recognition unit may include a microphone and a speech recognition chip, or the speech recognition unit may include only the microphone and a speech recognition function is realized by a processor of the mobile device. Speech for controlling the mobile device may be customized by the user as desired or may be factory default speech.

At block S 102, an identification code of each of air conditioning devices located around the measurement point and relative position information between the measurement point and the air conditioning devices located around the measurement point are obtained based on a Bluetooth signal received at the measurement point.

In applications, when the mobile device is at one measurement point and subsequent to a completion of marking of a position of the measurement point in the electronic map, an identification code of each of air conditioning devices located around the measurement point may be obtained based on a Bluetooth signal received by the mobile device at the measurement point. A Bluetooth broadcasting function of each of the air conditioning devices in the target region needs to be controlled to turn on prior to a reception of the Bluetooth signal by the mobile device, in such a manner that each of the air conditioning devices in the target region may broadcast the Bluetooth signal to the mobile device. The Bluetooth signal broadcast by each of the air conditioning devices carries an identification code that uniquely identifies the air conditioning device. A coverage area of the Bluetooth signal broadcast by each of the air conditioning devices in the target region should be able to cover the target region, which can be realized by controlling transmission power of the air conditioning devices. Similarly, a reception area of the Bluetooth signal of the mobile device should be able to cover the target region, which can be realized by controlling reception power of the mobile device.

In an embodiment, the method includes, prior to the operation at block S102: receiving a turn-on instruction; and broadcasting a turn-on signal based on the turn-on instruction. The turn-on signal is configured to control each of the air conditioning devices located around the measurement point to turn on a Bluetooth broadcasting function and to broadcast the Bluetooth signal.

In an embodiment, the method further includes, prior to the operation at block S102: receiving a Bluetooth power adjustment instruction; and adjusting Bluetooth broadcast power of each of the air conditioning devices located around the measurement point based on the Bluetooth power adjustment instruction.

In applications, the turn-on signal may be transmitted by the mobile device or the management device to the target region using an agreed communication method, to turn on the Bluetooth broadcasting function of each of the air conditioning devices in the target region, in such a manner that each of the air conditioning devices may broadcast the Bluetooth signal that carries the unique identification code of the air conditioning device. Similarly, the Bluetooth power adjustment instruction may be transmitted by the mobile device or the management device to the target region using an agreed communication method, to adjust the Bluetooth broadcast power of each of the air conditioning devices in the target region. Each of the turn-on instruction and the Bluetooth power adjustment instruction may be input by the user as desired via the human-computer interaction component of the mobile device.

In applications, subsequent to a reception of the Bluetooth signal at one measurement point, the mobile device may calculate a relative distance between the measurement point and each air conditioning device broadcasting the Bluetooth signal based on an intensity of each Bluetooth signal using a Bluetooth signal-based distance measurement method (e.g., a Received Signal Strength Indicator (RSSI) algorithm). Relative coordinates between the measurement point and each of the air conditioning devices may be further obtained based on the coordinates of the measurement point and the relative distance between the measurement point and each air conditioning device.

At block S103, at least one target air conditioning device in the target region is determined based on the relative position information between the measurement point and the air conditioning devices located around the measurement point.

In applications, theoretically, the mobile device is capable of receiving the Bluetooth signal broadcast by each of the air conditioning devices located in the target region when the mobile device is at any measurement point in the target region, and may additionally receive Bluetooth signal broadcasts by other air conditioning devices located outside the target region. Therefore, whether each of the air conditioning devices detected is located in the target region needs to be further determined based on the relative position information between the measurement point and the air conditioning device. The relative position information may include only a relative distance. When dimensions such as a length, a width, and a height, etc. of the target region are known, an air conditioning device at a relative distance from the measurement point that is smaller than or equal to a maximum value of the length, width, height, etc. of the target region may be determined to be located in the target region based on relative distances between the measurement point and the air conditioning devices located around the measurement point.

In an embodiment, the operation at block S103 includes determining, based on the relative distances between the measurement point and the air conditioning devices located around the measurement point, each air conditioning device at a relative distance from the measurement point that is smaller than or equal to a predetermined distance threshold as the target air conditioning device located in the target region.

In applications, the predetermined distance threshold is the maximum value of the length, the width, and the height of the target region. When the target region is an indoor region with walls on six sides, since the Bluetooth signals broadcast by other air conditioning devices located outside the target region are severely attenuated after passing through the walls, relative distances between the other air conditioning devices and the measurement point calculated based on the Bluetooth signal-based distance measurement method are of large values, which are usually greater than the predetermined distance threshold. Therefore, depending on the relative distance, whether each of the air conditioning devices detected is in the target region can be determined more accurately.

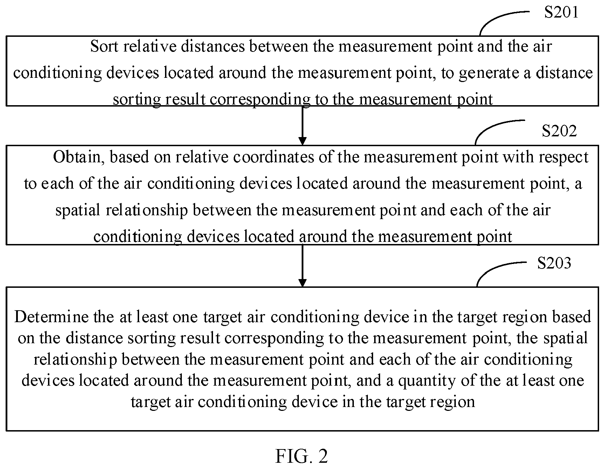

As illustrated in FIG. 2, in an embodiment, the operation at block S103 includes the following operations at blocks.

At block S201, relative distances between the measurement point and the air conditioning devices located around the measurement point are sorted, to generate a distance sorting result corresponding to the measurement point.

At block S202, a spatial relationship between the measurement point and each of the air conditioning devices located around the measurement point is obtained based on relative coordinates between the measurement point and each of the air conditioning devices located around the measurement point.

At block S203, the at least one target air conditioning device in the target region is determined based on the distance sorting result corresponding to the measurement point, the spatial relationship between the measurement point and each of the air conditioning devices located around the measurement point, and a quantity of the at least one target air conditioning device in the target region.

In applications, the relative distances between the measurement point and the air conditioning devices located around the measurement point may be sorted in a descending order or an ascending order, to generate the distance sorting result, which may be in a form of a distance sequence or an identification code sequence. The identification code sequence is a sequence obtained by sorting identification codes of the air conditioning devices corresponding to the relative distances in the ascending order of the relative distances or the ascending order of relative distances. Since a quantity of air conditioning devices in the target region is known, the quantity may be manually counted by the user and input into the mobile device. Therefore, when a quantity of the relative distances or a quantity of the identification codes in the distance sorting result is greater than the quantity of the air conditioning devices in the target region, any excess air conditioning device at a far relative distance from the measurement point may be determined as being out of the target region.

In an embodiment, the method includes, prior to the operation at block S103 : receiving a device quantity setting instruction; and setting a quantity of at least one target air conditioning device in the target region based on the device quantity setting instruction.

In applications, the device quantity setting instruction may be input by the user as desired via the human-computer interaction component of the mobile device.

In applications, the spatial relationship between a current measurement point and each air conditioning device may be determined based on relative coordinates between the current measurement point and the air conditioning device. That is, each air conditioning device should be located on a surface of a sphere centered on the current measurement point and in a radius of the relative distance between the air conditioning device and the current measurement point. If an actual spatial relationship between the current measurement point and one air conditioning device is that no air conditioning device in the target region is located on a surface of a sphere where the air conditioning device is located, the air conditioning device can be construed as being out of the target region. The actual spatial relationship may be observed by the user personally and input manually by the user into the mobile device.

In an embodiment, the method includes, prior to the operation at block S 103 : receiving a spatial relationship setting instruction; and obtaining, based on the spatial relationship setting instruction, actual spatial relationships between the measurement point and the air conditioning devices around the measurement point.

In applications, the spatial relationship setting instruction may be input by the user as desired via the human-computer interaction component of the mobile device.

In applications, when the target region is an open region with six sides that are not all walls, the mobile device at the current measurement point may receive Bluetooth signals broadcast by air conditioning devices from other regions. In this case, determining whether the air conditioning device is in the target region only depending on the relative distances has a certain error. By combining the distance sorting result and the spatial relationship to make a comprehensive determination, whether each air conditioning device is in the target region can be determined more accurately.

At block S 104, grouping information corresponding to the target region is generated. The grouping information includes the coordinates of the measurement point in the electronic map and an identification code of each of the at least one target air conditioning device.

In applications, subsequent to a determination of the at least one target air conditioning device in the target region, grouping information is generated based on coordinates of the current measurement point in the electronic map and the identification code of each of the at least one target air conditioning device, and the group information is stored in the mobile device, enabling the user to manage and control the air conditioning devices in the target region directly via the mobile device. The mobile terminal may be controlled to import the grouping information into the management device when necessary, enabling the user to manage and control the air conditioning devices in the target region via the management device. The mobile device may further automatically upload the grouping information to the management device subsequent to each generation of the grouping information.

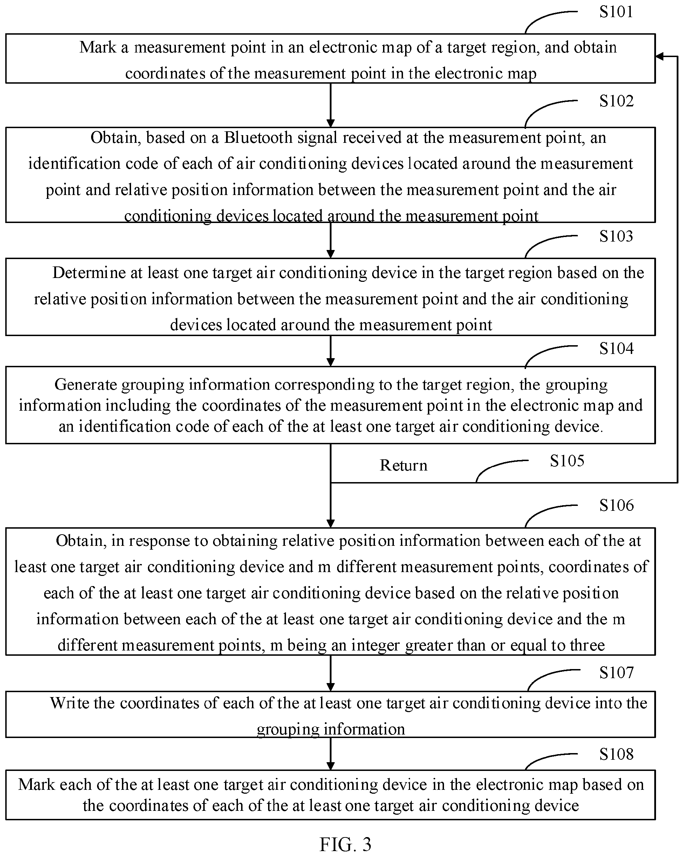

As illustrated in FIG. 3, in an embodiment, the method includes the following operations at blocks S105 to S108, subsequent to the operation at block S104.

At block S105, the method returns to perform operations at blocks S101 and S102 or operations at blocks S101 to S104.

At block S106, in response to obtaining relative position information between each of the at least one target air conditioning device and m different measurement points, coordinates of each of the at least one target air conditioning device are obtained based on the relative position information between each of the at least one target air conditioning device and the m different measurement points, m being an integer greater than or equal to three.

At block S107, the coordinates of each of the at least one target air conditioning device are written into the grouping information.

At block S108, each of the at least one target air conditioning device in the electronic map is marked based on the coordinates of each of the at least one target air conditioning device.

In applications, the operations at blocks S101 and S102 may be repeated to continue obtaining relative position information between a next measurement point in the target region and air conditioning devices located around the next measurement point, which will be repeated until relative position information between each of the at least one target air conditioning device and at least three different measurement points is obtained. Alternatively, the operations at blocks S101 to S104 are repeated until grouping information is generated based on the Bluetooth signals received by the mobile device at the at least three measurement points. Different target air conditioning devices may be determined based on relative position information between different measurement points and air conditioning devices located around the different measurement points. By comparing the different target air conditioning devices determined based on the relative position information between the different measurement points and the air conditioning devices around the different measurement points, at least one most accurate target air conditioning device may be selected from the different target air conditioning devices, improving an accuracy of the at least one target air conditioning device finally determined. The at least one most accurate target air conditioning device may be manually selected by the user through controlling the mobile device.

In an embodiment, the method includes, prior to the operation at block S106: receiving a device screening instruction; and determining the at least one target air conditioning device in the target region based on the device screening instruction.

In applications, the device screening instruction may be input by the user as desired via the human-computer interaction component of the mobile device.

In applications, on a basis of determined target air conditioning devices, when relative position information between one of the determined target air conditioning devices and the at least three different measurement points is obtained, coordinates of the target air conditioning device may be obtained by using a three-point positioning method, and then written into the grouping information. When a quantity of the different measurement points is greater than three, a plurality of coordinates of the target air conditioning device may be calculated. The plurality of coordinates are fitted or manually screened to finally obtain the most accurate coordinates of the target air conditioning device.

In an embodiment, the method includes, prior to the operation at block S107: receiving a coordinate screening instruction; and determining, based on the coordinate screening instruction, one coordinate of each of the at least one target air conditioning device from a plurality of coordinates of each of the at least one target air conditioning device; or fitting the plurality of coordinates of each of the at least one target air conditioning device to determine one coordinate of each of the at least one target air conditioning device.

In applications, the coordinate screening instruction may be input by the user as desired via the human-computer interaction component of the mobile device.

In applications, assuming that coordinates of the at least one target air conditioning device are $(x,y,z)$, coordinates of the three different measurement points are $(a_1,b_1,c_1)$, $(a_2,b_2,c_2)$, and $(a_3,b_3,c_3)$, and relative distances between the target air conditioning device and the three different measurement points are $d_1$, $d_2$, and $d_3$, expressions for relative coordinates between the target air conditioning device and the three different measurement points are given as follows:

$$(x-a_1)^2 + (x-b_1)^2 + (x-c_1)^2 = d_1,$$

$$(x-a_2)^2 + (x-b_2)^2 + (x-c_2)^2 = d_2,$$

and

$$(x-a_3)^2 + (x-b_3)^2 + (x-c_3)^2 = d_3.$$

Let respective Z-axis coordinates of the three different measurement points in a map be 0, i.e., $c_1=c_2=c_3=0$. After the above three expressions are solved simultaneously, the coordinates of the target air conditioning device may be obtained as follows:

$$x=[(b_1-b_3)(d_2^2 - d_1^2) - (b_1-b_2)(d_3^2 - d_1^2)]/2[(a_1-a_3)(b_2 - b_1) - (a_1-a_2)(b_3^2 - b_1^2)],$$

$$y=[(a_1-a_3)(d_2^2 - d_1^2) - (a_1-a_2)(d_3^2 - d_1^2)]/2[(a_1-a_3)(b_2 - b_1) - (a_1-a_2)(b_3^2 - b_1^2)],$$

and

$$z=[d_1^2-(x-a_1)^2-(y-b_1)^2]^{1/2}.$$

Coordinates of each target air conditioning device may be obtained through the above calculation method.

In applications, each target air conditioning device may be marked in the electronic map subsequent to obtaining of the coordinates of the target air conditioning device. When the electronic map is a three-dimensional map, a position of the target air conditioning device may be directly marked in the electronic map. When the electronic map is a two-dimensional planar map, the position of each target air conditioning device may be marked subsequent to a projection of X-axis and Y-axis coordinates of each target air conditioning device to the two-dimensional planar map along a Z-axis coordinate, for a reason that the two-dimensional planar map does not have height information of Z-axis. Marking methods include marking using a text, marking using a symbol, marking using a colored shape, etc., to enable the user to intuitively see the position of the target air conditioning device in the two-dimensional map. Further, a specific coordinate parameter may be displayed at a marking position.

In an embodiment, the method includes, prior to the block S108, scaling the electronic map based on a proportional relationship between height information of the electronic map and a Z-axis coordinate of any one of the at least one target air conditioning device.

In applications, the coordinates of each target air conditioning device are calculated based on an actual distance between the target air conditioning device and the measurement point, whereas the electronic map is displayed after being scaled down based on a proportional relationship between a size of a display of the mobile device and an actual size of the target region. In view of this, the target air conditioning device cannot be directly marked on the electronic map. The electronic map needs to be automatically scaled based on the proportional relationship between the height information of the electronic map and the Z-axis coordinate of any one of the at least one target air conditioning device. In particular, the electronic map may be scaled based on a proportional relationship between the height information of the electronic map and a maximum Z-axis coordinate of all the air conditioning devices. When the electronic map is a planar map without layer height information, the map may be scaled manually by the user through operating the mobile device.

In an embodiment, the method includes, prior to the operation at block S102: receiving a scaling instruction; and scaling the electronic map based on the scaling instruction.

In applications, the scaling instruction may be input by the user as desired via the human-computer interaction component of the mobile device.

In an embodiment, the electronic map is the two-dimensional planar electronic map. The operation at block S108 includes projecting an X-axis coordinate and a Y-axis coordinate of each of the at least one target air conditioning device to the electronic map along a Z-axis, and marking a projection position of each of the at least one target air conditioning device in the electronic map.

In applications, when the electronic map is the two-dimensional planar map, the X-axis coordinate and the Y-axis coordinate of the target air conditioning device need to be projected along the Z-axis to a same position of the X-axis and a same position of the Y-axis in the two-dimensional planar map, for a reason that the two-dimensional planar map does not have the height information of the Z-axis.

In an embodiment, the method further includes, subsequent to the operation at block S104, importing the grouping information into a management device. The management device is configured to associate, based on the identification code of each of the at least one target air conditioning device, the grouping information with predetermined data having a same identification code as the target air conditioning device.

In applications, subsequent to obtaining of the grouping information of the target region, the grouping information may be imported into the management device through a wired or wireless communication method supported by the mobile device. The management device is configured to pre-store data (such as operation parameters, device specification parameters, etc.) related to each target air conditioning device, and establish a correspondence between unique identification codes of individual target air conditioning devices and the pre-stored data. The management device can be configured to look up, in the pre-stored data based on the displacement identification code of each target air conditioning device, data having a same identification code as the displacement identification code, and associate the looked-up data with each identification code in the grouping information, subsequent to import of the grouping information into the management device.

In applications, a correspondence between the predetermined data and the identification codes may be predetermined and stored in an internal storage space of the management device. In this way, when the predetermined data needs to be obtained based on the identification code, corresponding predetermined data may be found in the internal storage space based on the identification code and the correspondence. The correspondence may specifically be a mapping relationship, which may exist in a form of a correspondence table. The correspondence table may be a Look-Up-Table (LUT). Or the correspondence may exist in other forms in which a corresponding search result may be searched and output by inputting data. The management device may further include a memory configured to equivalently replace the internal storage space to realize a data storage function. By pre-establishing the correspondence, corresponding predetermined data can be quickly found based on the identification code, which effectively saves computing resources of and execution time spent by the management device.

In applications, the mobile device may further repeatedly perform the above method for grouping the air conditioning devices to obtain grouping information of a plurality of target regions. The grouping information is then imported into the management device in bulk. For example, grouping information of all floors of a building is obtained, and then imported into the management devices in bulk. Further, the user may selectively customize and import grouping information that needs to be imported into the management device.

With the method for grouping the air conditioning devices provided by the embodiments of the present disclosure, by using a positioning method based on the Bluetooth signal, a position, in the electronic map, of at least one air conditioning device in the target region can be easily and quickly located, and corresponding grouping information can be generated, which improves a fault-tolerance rate and reduces labor costs.

It should be understood that numerical values of sequence numbers of respective steps in the above embodiments do not mean a sequence of execution. The sequence of execution of respective processes should be determined by functions and internal logic of the processes, and should not constitute any limitation on an implementation process of the embodiments of the present disclosure.

The embodiments of the present disclosure further provide an apparatus for grouping air conditioning devices, which is applied in the mobile device to perform the steps of the above method embodiments. The apparatus may be a virtual appliance in the mobile device and executed by a processor of the mobile device, or may be the mobile device itself.

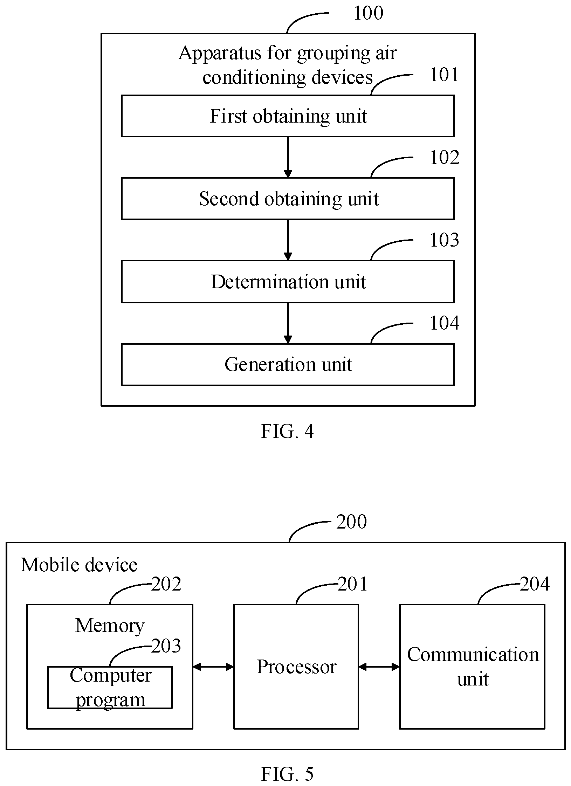

As illustrated in FIG. 4, an apparatus 100 for grouping air conditioning devices provided by the embodiments of the present disclosure includes a first obtaining unit 101, a second obtaining unit 102, a determination unit 103, and a generation unit 104.

The first obtaining unit 101 is configured to mark a measurement point in an electronic map of a target region, and obtain coordinates of the measurement point in the electronic map.

The second obtaining unit 102 is configured to obtain, based on a Bluetooth signal received at the measurement point, an identification code of each of air conditioning devices located around the measurement point and relative position information between the measurement point and the air conditioning devices located around the measurement point.

The determination unit 103 is configured to determine at least one target air conditioning device in the target region based on the relative position information between the measurement point and the air conditioning devices located around the measurement point.

The generation unit 104 is configured to generate grouping information corresponding to the target region. The grouping information includes the coordinates of the measurement point in the electronic map and an identification code of each of the at least one target air conditioning device.

In an embodiment, the apparatus for grouping the air conditioning devices further includes an instruction receiving unit configured to receive a marking instruction. The first obtaining unit is further configured to mark the measurement point in the electronic map of the target region based on the marking instruction, and obtain the coordinates of the measurement point in the electronic map.

In an embodiment, the instruction receiving unit is further configured to receive a map display instruction.

The apparatus for grouping the air conditioning devices further includes a display unit configured to display the electronic map of the target region based on the map display instruction.

In an embodiment, the instruction receiving unit is further configured to receive a turn-on instruction.

The apparatus for grouping the air conditioning devices further includes a turn-on unit configured to broadcast a turn-on signal based on the turn-on instruction. The turn-on signal is configured to control each of the air conditioning devices in the target region to turn on a Bluetooth broadcasting function and to broadcast the Bluetooth signal.

In an embodiment, the instruction receiving unit is further configured to receive a Bluetooth power adjustment instruction.

The apparatus for grouping the air conditioning devices further includes a power adjustment unit configured to adjust Bluetooth broadcasting power of each of the air conditioning devices located around the measurement point based on the Bluetooth power adjustment instruction.

In an embodiment, the instruction receiving unit is further configured to receive a device quantity setting instruction.

The apparatus for grouping the air conditioning devices further includes a quantity setting unit configured to set a quantity of at least one target air conditioning device in the target region based on the device quantity setting instruction.

In an embodiment, the instruction receiving unit is further configured to receive a spatial relationship setting instruction.

The apparatus for grouping the air conditioning devices further includes a spatial relationship setting unit configured to obtain, based on the spatial relationship setting instruction, actual spatial relationships between the measurement point and the air conditioning devices around the measurement point.

In an embodiment, the apparatus for grouping the air conditioning devices further includes a return unit, a coordinate obtaining unit, a writing unit, and a marking unit.

The return unit is configured to return to perform operations at blocks S101 and S102.

The coordinate obtaining unit is configured to obtain, in response to obtaining relative position information between each of the at least one target air conditioning device and m different measurement points, coordinates of each of the at least one target air conditioning device based on the relative position information between each of the at least one target air conditioning device and the m different measurement points, m being an integer greater than or equal to three.

The writing unit is configured to write the coordinates of each of the at least one target air conditioning device into the grouping information.

The marking unit is configured to mark each of the at least one target air conditioning device in the electronic map based on the coordinates of each of the at least one target air conditioning device.

In an embodiment, the instruction receiving unit is further configured to receive a device screening instruction.

The apparatus for grouping the air conditioning devices further includes a device screening unit configured to determine the at least one target air conditioning device located in the target region based on the device screening instruction.

In an embodiment, the instruction receiving unit is further configured to receive a coordinate screening instruction.

The apparatus for grouping the air conditioning devices further includes a coordinate screening unit and a coordinate fitting unit.

The coordinate screening unit is configured to determine, based on the coordinate screening instruction, one coordinate of each of the at least one target air conditioning device from a plurality of coordinates of each of the at least one target air conditioning device.

The coordinate fitting unit is configured to fit the plurality of coordinates of each of the at least one target air conditioning device to determine one coordinate of each of the at least one target air conditioning device.

In an embodiment, the apparatus for grouping the air conditioning devices further includes a scaling unit configured to scale the electronic map based on a proportional relationship between height information of the electronic map and a Z-axis coordinate of any one of the at least one target air conditioning device.

In an embodiment, the instruction receiving unit is further configured to receive a scaling instruction.

The scaling unit is further configured to scale the electronic map based on the scaling instruction.

In an embodiment, the apparatus for grouping the air conditioning devices further includes an importing unit configured to import the grouping information into a management device. The management device is configured to associate, based on the identification code of each of the at least one target air conditioning device, the grouping information with predetermined data having a same identification code as the target air conditioning device.

In applications, the units in the apparatus for grouping the air conditioning devices may be software program units, which may be realized by different logic circuits integrated in a processor or by separate physical components connected to the processor, or may be realized by a plurality of distributed processors.

As illustrated in FIG. 5, the embodiments of the present disclosure further provide a mobile device 200. The mobile device 200 includes at least one processor 201 (only one processor is illustrated in FIG. 5), a memory 202, a computer program 203 stored in the memory 202 and executable on the at least one processor 201, and a communication unit 204. The processor 201, when executing the computer program 203, implements the steps in each of the above-mentioned method embodiments.

In applications, the mobile device may include, but is not limited to, a communication unit, a memory, a processor, and the like. It should be understood by those skilled in the art that FIG. 5 is merely an example of the mobile device and does not constitute a limitation of the mobile device. The mobile device may include more or fewer components than those illustrated in the figures, or combine certain components, or have a different component. For example, the mobile device may further include an input/output device, a network access device, and the like. The input/output device may include the aforementioned human-computer interaction component, and may further include the display configured to display operation parameters of the mobile device.

In applications, the processor may be a Central Processing Unit (CPU), a general-purpose processor, a Digital Signal Processor (DSP), an Application Specific Integrated Circuit (ASIC), a Field-Programmable Gate Array (FPGA) or other programmable logic devices, a discrete gate or a transistor logic device, a discrete hardware component, etc. The general-purpose processor may be a microprocessor, or any conventional processor, etc.

In applications, in some embodiments, the memory may be an internal storage unit of a terminal device, such as a hard disk or a memory of the terminal device. In some other embodiments, the memory may also be an external storage device of the terminal device, such as a plug-in hard disk equipped on the terminal device, a Smart Media Card (SMC), a Secure Digital (SD) card, a Flash Card, etc. Further, the memory may further include both the internal storage unit of the terminal device and the external storage device. The memory is configured to store an operating device, an application, a boot loader, data, and other programs such as program code of a computer program. The memory may further be configured to temporarily store data that has been or will be output.

In applications, the display may be a Thin Film Transistor Liquid Crystal Display (TFT-LCD), a Liquid Crystal Display (LCD), an Organic Electroluminescence Display (OLED), a Quantum Dot Light Emitting Diodes (QLED) display, and so on.

In applications, the communication unit can be set up as any device capable of directly or indirectly establishing long-distance wired or wireless communication with a user terminal as desired. For example, the communication unit can be configured to provide communication solutions applied to a network device that include Wireless Local Area Networks (WLAN) (e.g., Wi-Fi networks), Bluetooth, Zigbee, Frequency Modulation (FM), Near Field Communication (NFC), Infrared (IR) technology, or the like. The communication unit may include an antenna. The antenna may have only one array element or may be an antenna array including a plurality of array elements. The communication unit may be configured to receive electromagnetic waves through the antenna, perform a frequency modulation processing and a filtering processing on an electromagnetic wave signal, and transmit the processed electromagnetic wave signal to a processor. The communication unit may further be configured to receive a to-be-transmitted signal from the processor, perform frequency modulation and amplification on the signal, and convert the signal into electromagnetic waves to be radiated out by the antenna.

It should be noted that contents such as information interactions and execution processes between the above apparatuses/units are based on a same concept as the embodiments of the present disclosure. Reference to specific functions and technical effects brought by the above apparatuses/units can be made to the method embodiments, and thus details thereof will be omitted herein.

Those skilled in the art can clearly understand that, for convenience and conciseness of description, the divisions of the above functional units and modules are merely illustrative. In practical applications, the above functions can be allocated to different functional units for implementation as required. That is, an internal structure of the apparatus is divided into different functional units to complete all or part of the functions described above. The functional units in the embodiments may be integrated into one processing unit, or each unit may exist physically alone, or two or more units may be integrated into one unit. The integrated units can be implemented in a form of hardware, or in a form of a software functional unit. In addition, specific names of the functional units and modules are only for the convenience of distinguishing one from another, and are not used to limit the scope of the present disclosure. For a specific working process of the units in the above apparatus, reference may be made to a corresponding process in the above method embodiments, and details thereof will not be repeated herein

The embodiments of the present disclosure further provide a computer-readable storage medium. The computer-readable storage medium stores a computer program. The computer program, when executed by a processor, implements the steps in any one of the above method embodiments.

The embodiments of the present disclosure further provide a computer program product. The computer program product, when executed on the mobile device, enables the mobile device to implement the steps in any one of the above method embodiments.

If the integrated units are realized in a form of functional software units and are sold or used as separate products, the integrated units can be stored in a computer-readable storage medium. Based on this understanding, all or part of the processes in the above method embodiments of the present disclosure may also be implemented by relevant hardware instructed by a computer program. The computer program can be stored in a computer-readable storage medium. When the computer program is executed by the processor, steps of the above method embodiments may be implemented. The computer program may include computer program codes. The computer program codes may be in a form of source codes, object codes, an executable file, or some intermediate forms, etc. The computer-readable medium may include any entity or device capable of carrying the computer program codes to the mobile device, a recording medium, a computer memory, a Read-Only Memory (ROM), a Random Access Memory (RAM), an electric carrier signal, a telecommunications signal, and a software distribution medium, etc., e.g., a USB disk, a mobile hard disk, a magnetic disk, or an optical disk,

In above embodiments, description of respective embodiments emphasizes different aspects, and for parts that are not detailed or described in some embodiments, reference may be made to relevant description of other embodiments.

Those skilled in the art could be aware that, exemplary units and algorithm steps described in combination with embodiments disclosed herein may be implemented by electronic hardware or in a combination of computer software and electronic hardware. Whether these functions are executed by hardware or software depends upon the specific use and design constraints of the technical solutions. Those skilled in the art may adopt different methods for different specific uses to implement described functions, which should not be regarded as going beyond the scope of the present disclosure.

In the embodiments provided by the present disclosure, it should be understood that, the disclosed apparatus and method may be implemented in other ways. For example, the apparatus embodiments described above are merely illustrative. For example, the units are merely divided based on the logic functions, and they can be divided in other ways in actual implementations. For example, a plurality of units or components may be combined or may be integrated into another apparatus, or some features may be omitted or not executed. In addition, the mutual coupling or direct coupling or communication connection between these units illustrated or discussed above may be via some interfaces, or the indirect coupling or communication connection between apparatuses or units may be in an electrical, mechanical, or other manner.

The units described as separate parts may or may not be physically separated. Parts illustrated as units may or may not be physical units, i.e., the parts may be located in one place, or may be distributed on a plurality of network units. Some or all of the units can be selected according to actual needs to achieve objects of the solutions of the embodiments.

As mentioned above, the above embodiments are only used to illustrate, rather than to limit, the technical solutions of the present disclosure. Although the present disclosure is described in detail with reference to the above embodiments, those skilled in the art should understand that modifications may be made to the technical solutions described in the above embodiments, or equivalent replacements may be made to some of the technical features of the technical solutions described in the above embodiments. However, these modifications or replacements do not cause a deviation of the essence of corresponding technical solutions from the spirit and scope of the technical solutions of the embodiments of the present disclosure, and shall be contained in the scope of the present disclosure.

**Claims**

1. A method for grouping air conditioning devices, comprising:

   marking a measurement point in an electronic map of a target region, and obtaining coordinates of the measurement point in the electronic map;
   obtaining, based on a Bluetooth signal received at the measurement point, an identification code of each of air conditioning devices located around the measurement point and relative position information between the measurement point and the air conditioning devices located around the measurement point;
   determining at least one target air conditioning device in the target region based on the relative position information between the measurement point and the air conditioning devices located around the measurement point; and
   generating grouping information corresponding to the target region, the grouping information comprising the coordinates of the measurement point in the electronic map and an identification code of each of the at least one target air conditioning device.

2. The method for grouping the air conditioning devices according to claim 1, wherein said determining the at least one target air conditioning device in the target region based on the relative position information between the measurement point and the air conditioning devices located around the measurement point comprises:

   sorting relative distances between the measurement point and the air conditioning devices located around the measurement point, to generate a distance sorting result corresponding to the measurement point;
   obtaining, based on relative coordinates between the measurement point and each of the air conditioning devices located around the measurement point, a spatial relationship between the measurement point and each of the air conditioning devices located around the measurement point; and
   determining the at least one target air conditioning device in the target region based on the distance sorting result corresponding to the measurement point, the spatial relationship between the measurement point and each of the air conditioning devices located around the measurement point, and a quantity of the at least one target air conditioning device in the target region.

3. The method for grouping the air conditioning devices according to claim 1, further comprising:

   returning to perform said marking a measurement point in the electronic map of the target region, and obtaining coordinates of the measurement point in the electronic map, and said obtaining, based on the Bluetooth signal received at the measurement point, the identification code of each of the air conditioning devices located around the measurement point and the relative position information between the measurement point and the air conditioning devices located around the measurement point;
   obtaining, in response to obtaining relative position information between each of the at least one target air conditioning device and m different measurement points, coordinates of each of the at least one target air conditioning device based on the relative position information between each of the at least one target air conditioning device and the m different measurement points, m being an integer greater than or equal to three;
   writing the coordinates of each of the at least one target air conditioning device into the grouping information; and
   marking each of the at least one target air conditioning device in the electronic map based on the coordinates of each of the at least one target air conditioning device.

4. The method for grouping the air conditioning devices according to claim 3, wherein said obtaining the coordinates of each of the at least one target air conditioning device based on the relative position information between each of the at least one target air conditioning device and the m different measurement points comprises:
   obtaining the coordinates of each of the at least one target air conditioning device based on the relative position information between each of the at least one target air conditioning device and the m different measurement points by using a three-point positioning method.

5. The method for grouping the air conditioning devices according to claim 3, further comprising, prior to said marking each of the at least one target air conditioning device in the electronic map based on the coordinates of each of the at least one target air conditioning device:
   scaling the electronic map based on a proportional relationship between height information of the electronic map and a Z-axis coordinate of any one of the at least one target air conditioning device.

6. The method for grouping the air conditioning devices according to claim 3, wherein the electronic map is a two-dimensional planar electronic map, and wherein said marking each of the at least one target air conditioning device in the electronic map based on the coordinates of each of the at least one target air conditioning device comprises: projecting an X-axis coordinate and a Y-axis coordinate of each of the at least one target air conditioning device to the electronic map along a Z-axis, and marking a projection position of each of the at least one target air conditioning device in the electronic map.

7. The method for grouping the air conditioning devices according to any one claims 1 to 6, further comprising: importing the grouping information into a management device, the management device being configured to associate, based on the identification code of each of the at least one target air conditioning device, the grouping information with predetermined data having a same identification code as the target air conditioning device.

8. An apparatus for grouping air conditioning devices, comprising:

a first obtaining unit configured to mark a measurement point in an electronic map of a target region, and obtain coordinates of the measurement point in the electronic map;
a second obtaining unit configured to obtain, based on a Bluetooth signal received at the measurement point, an identification code of each of air conditioning devices located around the measurement point and relative position information between the measurement point and the air conditioning devices located around the measurement point, the relative position information comprising a relative distance and relative coordinates;
a determination unit configured to determine at least one target air conditioning device in the target region based on the relative position information between the measurement point and the air conditioning devices located around the measurement point; and
a generation unit configured to generate grouping information corresponding to the target region, the grouping information comprising the coordinates of the measurement point in the electronic map and an identification code of each of the at least one target air conditioning device.

9. A mobile device, comprising a communication unit, a memory, a processor, and a computer program stored in the memory and executable on the processor, wherein the processor, when executing the computer program, implements the steps of the method for grouping the air conditioning devices according to any one of claims 1 to 7.

10. A computer-readable storage medium, having a computer program stored thereon, wherein the computer program, when executed by a processor, implements the steps of the method for grouping the air conditioning devices according to any one of claims 1 to 7.

S101

Mark a measurement point in an electronic map of a target region, and obtain coordinates of the measurement point in the electronic map

S102

Obtain, based on a Bluetooth signal received at the measurement point, an identification code of each of air conditioning devices located around the measurement point and relative position information between the measurement point and the air conditioning devices located around the measurement point

S103

Determine at least one target air conditioning device in the target region based on the relative position information between the measurement point and the air conditioning devices located around the measurement point

S104

Generate grouping information corresponding to the target region, the grouping information including the coordinates of the measurement point in the electronic map and an identification code of each of the at least one target air conditioning device

FIG. 1

S201

Sort relative distances between the measurement point and the air conditioning devices located around the measurement point, to generate a distance sorting result corresponding to the measurement point

S202

Obtain, based on relative coordinates of the measurement point with respect to each of the air conditioning devices located around the measurement point, a spatial relationship between the measurement point and each of the air conditioning devices located around the measurement point

S203

Determine the at least one target air conditioning device in the target region based on the distance sorting result corresponding to the measurement point, the spatial relationship between the measurement point and each of the air conditioning devices located around the measurement point, and a quantity of the at least one target air conditioning device in the target region

FIG. 2

```
                                                              ┌─── S101
┌────────────────────────────────────────────────────────────┐
│ Mark a measurement point in an electronic map of a target    │◄─┐
│ region, and obtain coordinates of the measurement point in   │  │
│ the electronic map                                           │  │
└────────────────────────────────────────────────────────────┘  │
                              │                                    │
                              ▼        ┌─── S102                    │
┌────────────────────────────────────────────────────────────┐  │
│ Obtain, based on a Bluetooth signal received at the          │  │
│ measurement point, an identification code of each of air     │  │
│ conditioning devices located around the measurement point    │  │
│ and relative position information between the measurement     │  │
│ point and the air conditioning devices located around the    │  │
│ measurement point                                            │  │
└────────────────────────────────────────────────────────────┘  │
                              │        ┌─── S103                   │
                              ▼                                    │
┌────────────────────────────────────────────────────────────┐  │
│ Determine at least one target air conditioning device in the │  │
│ target region based on the relative position information      │  │
│ between the measurement point and the air conditioning        │  │
│ devices located around the measurement point                 │  │
└────────────────────────────────────────────────────────────┘  │
                              │        ┌─── S104                   │
                              ▼                                    │
┌────────────────────────────────────────────────────────────┐  │
│ Generate grouping information corresponding to the target     │  │
│ region, the grouping information including the coordinates of │  │
│ the measurement point in the electronic map and an            │  │
│ identification code of each of the at least one target air    │  │
│ conditioning device.                                         │  │
└────────────────────────────────────────────────────────────┘  │
                              │   Return    ┌─── S105              │
                              │─────────────────────────────────────┘
                              │        ┌─── S106
                              ▼
┌────────────────────────────────────────────────────────────┐
│ Obtain, in response to obtaining relative position           │
│ information between each of the at least one target air       │
│ conditioning device and m different measurement points,      │
│ coordinates of each of the at least one target air           │
│ conditioning device based on the relative position           │
│ information between each of the at least one target air       │
│ conditioning device and the m different measurement points,  │
│ m being an integer greater than or equal to three            │
└────────────────────────────────────────────────────────────┘
                              │        ┌─── S107
                              ▼
┌────────────────────────────────────────────────────────────┐
│ Write the coordinates of each of the at least one target air │
│ conditioning device into the grouping information            │
└────────────────────────────────────────────────────────────┘
                              │        ┌─── S108
                              ▼
┌────────────────────────────────────────────────────────────┐
│ Mark each of the at least one target air conditioning device │
│ in the electronic map based on the coordinates of each of    │
│ the at least one target air conditioning device              │
└────────────────────────────────────────────────────────────┘
```

FIG. 3

100

Apparatus for grouping air
conditioning devices

101

First obtaining unit

102

Second obtaining unit

103

Determination unit

104

Generation unit

FIG. 4

200

Mobile device

202

Memory

203

Computer
program

201

Processor

204

Communication
unit

FIG. 5

## INTERNATIONAL SEARCH REPORT

| International application No. |
| --- |
| **PCT/CN2022/070148** |

| A. | CLASSIFICATION OF SUBJECT MATTER |
| --- | --- |
| | F24F 11/64(2018.01)i; F24F 11/56(2018.01)i; H04W 4/029(2018.01)i |

According to International Patent Classification (IPC) or to both national classification and IPC

| B. | FIELDS SEARCHED |
| --- | --- |

Minimum documentation searched (classification system followed by classification symbols)

    F24F,H04W,H04L,G06F,G06K,G06Q

Documentation searched other than minimum documentation to the extent that such documents are included in the fields searched

Electronic data base consulted during the international search (name of data base and, where practicable, search terms used)

    CNTXT, ENTXTC, DWPI, ENTXT, VEN, CNKI: 智能, 家电, 终端, 设备, 分组, 标识, 位置, 定位, 网络, 网关, 识别码, 测量, 距离, 蓝牙; gateway, position, locat+, ID, equipment, group+, measur+, Bluetooth, electronic map, identification code

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 106301946 A (BEIJING XIAOMI MOBILE SOFTWARE CO., LTD.) 04 January 2017 (2017-01-04)<br>    description, pages 3-8, and figures 1-6 | 1-10 |
| Y | CN 109862504 A (VIVO MOBILE COMMUNICATION CO., LTD.) 07 June 2019 (2019-06-07)<br>    description, pages 3-11 | 1-10 |
| PX | CN 113203193 A (SHANGHAI MEIKONG WISDOM CONSTRUCTION CO., LTD. et al.) 03 August 2021 (2021-08-03)<br>    claims | 1-10 |
| Y | CN 107295480 A (HUNAN FFLBAAR ELECTRONIC TECHNOLOGY CO., LTD.) 24 October 2017 (2017-10-24)<br>    description, pages 2-7 | 1-10 |
| Y | CN 110553361 A (ZHUHAI GREE ELECTRIC APPLIANCES INC.) 10 December 2019 (2019-12-10)<br>    description, pages 2-8 | 1-10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 March 2022** | **02 April 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/070148** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 112073956 A (CHINA UNITED NETWORK COMMUNICATIONS CORPORATION LIMITED et al.) 11 December 2020 (2020-12-11) description, pages 6-11 | 1-10 |
| Y | CN 111866828 A (BEIJING QISHENG TECHNOLOGY CO., LTD.) 30 October 2020 (2020-10-30) description, pages 4-13 | 1-10 |
| A | US 2015094080 A1 (BLEECHER, S. J. et al.) 02 April 2015 (2015-04-02) entire document | 1-10 |
| A | WO 2015167668 A1 (LIFE360 INC.) 05 November 2015 (2015-11-05) entire document | 1-10 |

Form PCT/ISA/210 (second sheet) (January 2015)

**INTERNATIONAL SEARCH REPORT**
Information on patent family members

International application No.

**PCT/CN2022/070148**

| Patent document cited in search report | | | Publication date (day/month/year) | Patent family member(s) | | | Publication date (day/month/year) |
|---|---|---|---|---|---|---|---|
| CN | 106301946 | A | 04 January 2017 | EP | 3291489 | A1 | 07 March 2018 |
| | | | | US | 2018062934 | A1 | 01 March 2018 |
| | | | | JP | 2018533086 | A | 08 November 2018 |
| | | | | RU | 2017103919 | A | 09 August 2018 |
| | | | | WO | 2018040325 | A1 | 08 March 2018 |
| CN | 109862504 | A | 07 June 2019 | None | | | |
| CN | 113203193 | A | 03 August 2021 | None | | | |
| CN | 107295480 | A | 24 October 2017 | None | | | |
| CN | 110553361 | A | 10 December 2019 | None | | | |
| CN | 112073956 | A | 11 December 2020 | None | | | |
| CN | 111866828 | A | 30 October 2020 | None | | | |
| US | 2015094080 | A1 | 02 April 2015 | US | 2020134669 | A1 | 30 April 2020 |
| | | | | CN | 105531948 | A | 27 April 2016 |
| | | | | JP | 2017224316 | A | 21 December 2017 |
| | | | | US | 2021125225 | A1 | 29 April 2021 |
| | | | | US | 2018108039 | A1 | 19 April 2018 |
| | | | | WO | 2015047657 | A1 | 02 April 2015 |
| | | | | AU | 2014328547 | A1 | 21 January 2016 |
| | | | | US | 2016275559 | A1 | 22 September 2016 |
| | | | | JP | 2017501482 | A | 12 January 2017 |
| | | | | KR | 20160030482 | A | 18 March 2016 |
| | | | | US | 2019080353 | A1 | 14 March 2019 |
| | | | | CA | 2915894 | A1 | 02 April 2015 |
| | | | | EP | 3050231 | A1 | 03 August 2016 |
| WO | 2015167668 | A1 | 05 November 2015 | US | 2015319568 | A1 | 05 November 2015 |
| | | | | US | 2015358774 | A1 | 10 December 2015 |

Form PCT/ISA/210 (patent family annex) (January 2015)

**EP 4 310 408 A1**

## REFERENCES CITED IN THE DESCRIPTION

### Patent documents cited in the description

- CN 202110480015